(19) **Europäisches Patentamt**

**European Patent Office**

**Office européen des brevets**

(11) **EP 1 724 012 A1**

(12) **EUROPEAN PATENT APPLICATION**

(43) Date of publication:
**22.11.2006 Bulletin 2006/47**

(51) Int Cl.:
**B01J 23/52** (2006.01)   **B01J 23/63** (2006.01)
**B01J 23/68** (2006.01)   **B01J 37/02** (2006.01)

(21) Application number: **05011050.1**

(22) Date of filing: **21.05.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Degussa AG**
**40474 Düsseldorf (DE)**

(72) Inventors:
• **Kröll, Michael, Dr.**
**63571 Gelnhausen (DE)**

• **Katusic, Stipan**
**65779 Kelkheim (DE)**
• **Krämer, Michael**
**61137 Schöneck (DE)**
• **Chung, Jerry (Chih-Yu)**
**105 Taipei (TW)**
• **Chen, Yu-Wen, Prof.**
**320 Jung-Li (TW)**

(54) **Catalyst containing gold on ceria-manganes oxide**

(57)   Goldcatalyst comprising gold on a support of ceria or ceria-manganese oxide is used for the oxidation of CO in a $H_2$ stream.

Figure 1

**Description**

The subject of the invention is a goldcatalyst, a method for its production and its use.

Gold with a large particle size has been regarded as a poorly active catalyst.

A theoretical calculation has explained the smooth surface of Au is noble in the dissociation adsorption of hydrogen (Hammer and Norskov, 1995).

However, when Au is deposited on nanoparticles like metal oxides by means of coprecipitation and deposition-precipitation techniques, it exhibits surprisingly high catalytic activity for CO oxidation at a temperature as low as 200 K (Haruta et al. 1989; Haruta and Daté, 2001). This finding has motivated many scientists and engineers to investigate in the catalysis of Au since 1990.

Many excellent reviews have been reported (Bond and Thompson, 1999; 2000; Cosandey and Madey, 2001; Kozlov et al., 1999; Haruta, 1997a, b; Haruta and Date, 2001; Okumura, 1999).

The selective removal of CO in a hydrogen rich gas under ambient conditions has been of considerable technical interest for purification of hydrogen rich gas, e.g. for $H_2$ supply in ammonia synthesis for a long time.

In recent years, this technology has attracted new interest due to its use in fuel cell technology.

Polymer electrolyte membrane fuel cells (PEMFC), in particular in vehicle applications, operate at relatively low temperatures, usually at 80-120 °C.

When hydrogen rich fuel is produced from methanol or gasoline on board by partial oxidation and steam reforming combined with water gas shift reaction, the Pt anodes at these low temperatures are often poisoned by incomplete combustion produces, mainly CO, reducing the overall fuel cell performance. Under normal running conditions, the product hydrogen stream contains approximately 75 vol.% $H_2$, 25 vol.% $CO_2$, a few vol.% $H_2O$, and 0.5-1.0 vol.% CO.

Thus in order to obtain optimum performance for the fuel cell vehicles, the total concentration of CO in the gas stream should be reduced, if possible, to below 100 ppm.

Metal oxide-supported nanosized gold catalysts are very active for CO oxidation at low temperature. The suitable supports are the metal oxides which can be partially reduced, such as $TiO_2$, $Fe_2O_3$, $CO_3O_4$, etc..

$CeO_2$ was used as a support because of its high oxygen storage capacity. Although several ceria-supported catalysts were reported before, most of their loading metals were not gold or different methods were used to prepare the catalysts.

$CeO_2$ has been used as the support for platinum (Holgado and Munuera, 1995), palladium (Yee et al., 1999), rhodium (Yee et al., 2000) and copper oxide (Avgouropoulos et al., 2002).

Antonucci et al. (2004) prepared the $CeO_2$ supported gold catalysts by coprecipitation method and used it on selective CO oxidation.

Osuwan et al. (2004) also prepared the gold/cerium oxide catalysts by three methods, co-precipitation, impregnation and sol-gel, and used it on water-gas shift reaction.

Hutchings et al. (1998) investigated in detail the effect of preparation conditions on copper containing catalysts, Cu-Mn-O catalysts, on the performance of catalytic removal of CO.

Another type of catalysts proposed for selective CO oxidation were noble metals, such as platinum, ruthenium and rhodium, supported on alumina and zeolite.

The Freni et al. (2000) investigation showed that $Ru/Al_2O_3$ and $Rh/Al_2O_3$ catalysts had higher selectively and reactivity for catalytic removal by oxidation of CO compared with a $Pt/Al_2O_3$ catalyst.

Lee et al. (1998) studied the catalytic performance of removal of CO by the selective catalytic oxidation method based on $Pt/Al_2O_3$ and A-zeolite, respectively.

Kahlich et al. (1997) investigated the kinetics of selective CO oxidation on $Pt/Al_2O_3$.

Dong et al. (1997) investigated the performance of oxidation of CO over supported $PdCl_2$-$CuCl_2$ catalysts, and also studied the effect of small amounts of impurities, such as HCl and $SO_2$, on the catalyst performance.

Avgouropoulos et al. (2002) compared the $Pt/r-Al_2O_3$, $Au/a-Fe_2O_3$ and $CuO-CeO_2$ catalysts for the selective oxidation of CO in hydrogen rich gas. The $Au/a-Fe_2O_3$ catalyst is superior to the other two for the reaction at relatively low reaction temperatures (< 80-120 °C, depending on contact time and feed composition employed), while at higher reaction temperatures, best results are obtained with the $CuO-CeO_2$ catalyst, which proved to be more active and remarkably more selective than the $Pt/r-Al_2O_3$ catalyst. The $Au/a-Fe_2O_3$ catalyst was the most sensitive, while the $Pt/r-Al_2O_3$ the most resistant towards deactivation caused by the presence of $CO_2$ and $H_2O$ in the feed. In addition, the $Au/a-Fe_2O_3$ lost a considerable portion of its activity during the first 80 h under reaction condition, the $CuO-CeO_2$ and $Pt/r-Al_2O_3$ catalysts exhibited a stable catalytic performance, at least, during the time-period of 7-8 days.

In contrast, Cameron (2003) reported that $Au/a-Fe_2O_3$ is much more reactive than $Pt/r-Al_2O_3$.

Several literatures have been reported about selective CO oxidation as shown in table 3.

It is found that most gold/ceria oxide catalysts do not show very high activities below 100 °C which is better for PROX reaction.

The cited references are published in

Hammer, B. and Norskov, J.K., Nature 376 (1995) 238.

M. Haruta, N. Yamada, T. Kobayashi, S. Iijima, J. Catal. 115 (1989) 301

Dong, J.K., Jae, H.S., S.H. Hong, I.S. Noon, Korean J. Chem. Eng. 14 (1997) 486-490.

Kahlich, M.J., Gasteiger, H.A., Behm, R.J., J. Catal. 171 (1997) 93-105.

Hutchings, G.J., Mirzaei, A.A., Joyner, R.W., Appl. Catal. 166 (1998) 143-152.

Lee, C., Yoom, H.K., Moon, S.H., Yoom, K.J., Korean J. Chem. Eng. 15 (1998) 590-595.

Bond, G.C. and Thompson, D.T., Catal. Rev.-Sci. Eng. 41 (1999) 319.

Kozlov, A.I., Kozlova, A.P., Liu, H., and Iwasawa, Y., Appl. Catal. A: General 182 (1999) 9-28.

Okumura, M., "Report of the Research Achievement of Interdisciplinary Basic Research Scetion: No. 393", Osaka National research Institute, 1999, 6.

Freni, S., Calogero, G., Cavallaro, S., J. Power Sources 87 (2000) 28-38.

Cosandey, F. and Madey, T.E., Surf. Rev. Lett 8 (2001) 73. Haruta, M. and Date, M., , Appl. Catal. A: General 222 (2001) 427-437.

R. J. H. Grisel, C. J. Westrstrate, A. Goossens, M. W. J. Craje, A. M. van der Kraan, and B. E. Nieuwenhuys, Catal. Today 72, 123 (2002)

J. P. Holgado, G. Munuera, XPS/TPR study of the reducibility of M/CeO2 catalysts (M=Pt, Rh): Does junction effect theory apply? Elsevier Science, Brussels, Belgium, 1995.

A.Yee, S. J. Morrison, H. Idriss, J. Catal. 186 (1999) 279.

A. Yee, S. J. Morrison, H. Idriss, Catal. Today 63 (2000) 327.

Avgouropoulos, G., Ioannides, T., Papadopoulou, C., batista, J., Hocevar, S., and matralis, catal. Today 75 (2002) 157-167.

A. Luengnaruemitchaia, S. Osuwana, E. Gularib, International Journal of Hydrogen Energy 29 (2004) 429 - 435.

Cameron, D., Corti, C., Holliday, R., and Thompson, D., "Gold-based catalysts for hydrogen processing and fuel cell systems", adapted from web site of world godl council, www.wgc.org. (2003).

M. Haruta, Journal of New Materials for Electrochemical Systems 7, 163-172 (2004)

The subject of the invention is a goldcatalyst, characterized in that the gold is supported on ceria.

In a preferred form of the invention the ceria is a polycrystalline cerium oxide powder in the form of aggregates of primary particles, which has

- a specific surface of between 20 and 200 $m^2/g$,

- an average primary particle diameter of between 5 and 20 nm, and

- an average, projected aggregate diameter of between 20 and 100 nm.

The ceria can be a $Ce_{1-x}Mn_xO_2$ support. The $Ce_{1-x}Mn_xO_2$ support can contain the elements in the ratio Ce:Mn=10:1 to 1:1.

The $Ce_{1-x}Mn_xO_2$ support can be prepared via the impregnation method, whereby a solution of a Mn-salt is added to the $CeO_2$ powder and the impregnated $CeO_2$ powder is then calcined.

The calcination can be made at a temperature of 350 °C to 450 °C for a time of up to 3 hours.

The ceria used according to the invention can be a known ceria, i.e. the ceria that is disclosed in EP 1506940A1 (=US 2005/036928A1) or that is disclosed in the German patent application DE 102005344, filed on February 5, 2005.

The ceria can be a polycrystalline cerium oxide powder in the form of aggregates of primary particles, which is characterised in that

- a specific surface of between 20 and 200 $m^2/g$,

- an average primary particle diameter of between 5 and 20 nm, and

- an average, projected aggregate diameter of between 20 and 100 nm.

As used herein, the term "polycrystalline" means that the primary particles are crystalline and fused into aggregates. The term "primary particles" means particles that are initially formed in the reaction and fuse together to form aggregates as the reaction progresses. The term "aggregate" means primary particles of similar structure and size that have fused together, the surface of which is smaller than the sum of the individual, isolated primary particles.

The average primary particle diameter and the average projected aggregate diameter (ECD; Equivalent Circle Diameter) are obtained by image analysis of TEM photographs. Both sizes are defined as number-based within the meaning of the application.

A powder with a specific surface of between 90 and 120 m$^2$/g may be preferred.

The average primary particle diameter can be between 8 and 15 nm and the average projected aggregate diameter between 30 and 70 nm.

It has proved advantageous for the primary particle diameters to have a narrow distribution. This means that, for an average value m of the diameter, at least 68% of the particles are in the range of 0.6 m to 1.4 m or 95% of the particles are in the range of 0.2 m to 1.8 m. For an average primary particle diameter of 10 nm, this means that at least 68% of the particles are in a range of between 6 and 14 nm, or 95% of the particles are in a range of between 2 and 18 nm.

Similarly, it is advantageous if the aggregate diameters have a narrow distribution. This means that, for an average value m of the projected aggregate diameter, at least 68% of the projected aggregate diameters are in the range of 0.6 m to 1.4 m or 95% of the particles are in the range of 0.2 m to 1.8 m. For an average, projected aggregate diameter of 40 nm this means that at least 68% of the particles are in a range of between 24 and 56 nm, or 95% of the particles are in a range of between 8 and 72 nm.

Preferably at least 70%, particularly preferably at least 80% of the aggregates of the cerium oxide powder according to the invention can have an area of less than 1500 nm$^2$.

It is also preferred that at least 85%, particularly preferably at least 90%, of the aggregates of the cerium oxide powders according to the invention have an area of less than 4500 nm$^2$.

In another embodiment, the cerium oxide powder according to the invention can have a composition CeOx with x=1.5<x<2 on the surface, wherein the range $1.7 \leq x \leq 1.9$ may be particularly preferred. This means that areas of cerium(III) oxide (Ce$_2$O$_3$) and cerium(IV) oxide (CeO$_2$) are present on the surface. This composition may be important particularly in the field of catalysis (oxygen storage, oxygen generation).

The cerium oxide powder according to the invention can have a total sodium content of less than 500 ppm, particularly preferably of less than 100 ppm, especially preferably less than 30 ppm.

In a particular form, the cerium oxide powder according to the invention can have less than 10 ppm on the surface and on layers of the particles close to the surface. This can be determined e.g. by large-area (1 cm$^2$) XPS analysis (XPS=X-ray induced photoelectron spectroscopy). A layer close to the surface means a surface produced by ion bombardment (5 keV argon ions).

In addition, the cerium oxide powder according to the invention can have a carbon content of less than 0.1 wt.-%, particularly preferably of less than 0.05 wt.-%. Sources of carbon are mainly organic cerium oxide precursors and organic solvents.

In one embodiment, the cerium oxide powder according to the invention is free from micropores with a pore diameter of less than 2 nm, determined by t-plot according to de Boer. The volume of the mesopores with a diameter of between 2 and 50 nm in the cerium oxide powder according to the invention can be between 0.40 and 0.60 ml/g, particularly preferably between 0.45 and 0.55 ml/g.

The mesopores in the cerium oxide powder according to the invention preferably exhibit a monomodal size distribution. This means that, when the pore volume is plotted against the pore diameter, no marked maximum (point without slope) occurs in the range between 2 and 50 nm. The pore volume thus increases constantly with the pore diameter.

The invention further provides a process for the production of the cerium oxide powder according to the invention, which is characterised in that an aerosol is reacted in a flame burning in a reaction chamber and the solid obtained is then separated from the gaseous substances, wherein

- the aerosol is produced from an atomizer gas, preferably air, and a solution containing between 2 and 40 wt.-% of a cerium compound that can be converted to cerium oxide by oxidation,

- the flame is obtained from a hydrogen-containing combustible gas and primary air, which can be air itself or an air/oxygen mixture,

- at least the same quantity of secondary air as primary air is introduced into the reaction chamber,

- for lambda, it is true that $1.1 \leq$ lambda $\leq 1.5$, with lambda being calculated from the quotient of the sum of the proportion of oxygen in the primary air, the secondary air and the atomizer gas, if it contains oxygen, divided by the sum of the cerium compound to be oxidised and the hydrogen-containing combustible gas, each in mol/h,

- the discharge velocity of the liquid droplets from the atomizer unit into the reaction chamber is greater than 500 m/s, and

- the velocity of the reaction mixture in the reaction chamber is greater than 2 m/s.

The cerium oxide powder according to the invention is obtained by a combination of the above-mentioned features. If individual features lie outside the limits claimed, this leads to a cerium oxide powder with an unfavorable, large aggregate diameter and/or to the formation of a coarse portion. A composition of this type cannot be tolerated e.g. when the cerium oxide powder is to be used as an abrasive in the semiconductor industry.

The proportion of the cerium compound in the solution is between 2 and 40 wt.-% in the process according to the invention. Lower values make no sense economically, and with higher values there can be problems with the solubility. It can be advantageous to select a proportion of the cerium compound in the solution of between 5 and 25 wt.-%.

The nature of the solvent, whether aqueous, organic or aqueous-organic, is not limited in the process according to the invention. It is dependent on the solubility of the cerium compounds used. However, it may be advantageous to use an organic solvent or mixtures of organic solvents with water. For example, alcohols such as ethanol, propanols or butanols or carboxylic acids such as acetic acid, propionic acid, 2-ethylhexanoic acid can be used. Halogen-containing solvents can also be used, but they mean that product purification steps are additionally necessary and so they are less advantageous.

The nature of the cerium compounds used in the process according to the invention is not limited. Organic cerium compounds can preferably be used. These can be, for example, cerium alkoxides, such as cerium isopropylate, cerium acetate, cerium acetylacetonate, cerium oxalate, cerium 2-ethylhexanoate and mixtures of the above. Cerium 2-ethylhexanoate can particularly preferably be used.

The solution can be fed in under a pressure of 1 to 1000 bar, preferably between 2 and 100 bar.

The atomization of these solutions can be performed e.g. by ultrasonic atomizer or at least one multi-substance nozzle. The multi-substance nozzle can be used at pressures of up to 100 bar. When a multi-substance nozzle is used, there is the advantage that the droplets can be produced with a gas jet. If this gas jet contains oxygen, a very intensive premixing of the oxidising agent with the cerium-containing compound can be achieved. A mist eliminator can advantageously be connected downstream.

An essential feature of the process according to the invention is the maintaining of the factor lambda, which, in the process according to the invention, is between 1.1 and 1.5. Outside this range, no cerium oxide powder according to the invention is obtained. With lower lambda values, there is the risk of incomplete oxidation, and with higher lambda values, mainly powders containing a coarse portion result. A lambda value of between 1.2 and 1.5 has proved advantageous.

A coarse portion is also obtained if the discharge velocity of the liquid droplets from the atomizer unit into the reaction chamber and the velocity of the reaction mixture in the reaction chamber lie outside the claimed limits.

The term "coarse portion" as used herein refers to particles with an average diameter of more than 100 nm.

Another important feature of the process according to the invention is the quantity of secondary air introduced into the reaction chamber. This must at least correspond to the quantity of primary air to obtain the cerium oxide powder according to the invention. If smaller quantities of secondary air are fed in, an increased proportion of coarse portions must again be expected. A process in which double the quantity of primary air is fed in as secondary air has proved advantageous.

It can also be advantageous if a restrictor is provided in the reaction chamber. This can be positioned at various points in the reaction chamber. With this, the degree of mixing of the reaction components, and the velocity thereof, can be intensified. In general, a turbulent flow will be particularly preferred.

The process according to the invention can be carried out in such a way that the reaction mixture is cooled to temperatures of 100 to 200 °C after leaving the reaction chamber. This can be achieved by introducing water vapor into the reaction chamber at one or more points.

The separation of the solid from gaseous products is not limited in the process according to the invention. For example, a cyclone or a filter can be used. It has proved particularly advantageous to use a heatable filter. The temperature of this filter can preferably be between 100°C. and 200 °C.

The temperature in the reaction chamber, measured 0.5 m below the flame, can preferably be between 1000 °C and 1400 °C, particularly preferably between 1100 °C and 1250 °C.

The goldcatalyst according to the invention can be produced by the method, which is characterized in that a solution of a gold salt i.e. $HauCl_4$ is added into a solution, which contains the suspended support, whereby the temperature is maintained at 60 to 70 °C, after aging a time the precipitate is filtered and washed until no Cl-ions were detected, dried and then calcined.

The drying can be made at a temperature of 70 to 90 °C.

The calcination can be made by a temperature of 100 to 200 °C.

The goldcatalyst according to the invention can be used for the oxidation of Co in a $H_2$-stream.

### Examples according to ceria

The specific surface is determined in accordance with DIN 66131, incorporated herein by reference.

The TEM photographs are obtained with a Hitachi TEM instrument, model H-75000-2. Using the CCD camera of the TEM instrument and subsequent image analysis, approx. 2000 aggregates are evaluated in each case with respect to the primary particle and aggregate diameters.

The surface properties, such as sodium content and stoichiometry of the cerium oxide powder, are determined by large-area (1 cm$^2$) XPS analysis (XPS=X-ray induced photoelectron spectroscopy).

The stoichiometry of the cerium oxide powder here is determined on the surface in the original state based on the fine structures of the Ce 3d5/2 and 3d3/2.

The sodium content is determined both in the original state and after 30 minutes surface erosion by ion bombardment (5 keV argon ions).

Sodium content (wet chemical): decomposition with $H_2SO_4$/HF, determination by ICPMS.

The pore size distribution is determined for micropores (<2 nm) by t-plot according to de Boer, for mesopores (2-50 nm) by the BJH method and for macropores (>50 nm) by Hg intrusion.

The dispersions are produced by ultrasonic treatment; ultrasound probe (Bandelin UW2200/DH13G), step 8, 100%; 5 minutes) in water. The average aggregate diameters d50 of the cerium oxide powders are determined with an LB-500 particle size analyzer from Horiba.

## Example 1

1200 g/h of a solution of cerium(III) 2-ethylhexanoate (49 wt.-%) in 2-ethylhexanoic acid (51 wt.-%) are atomized through a nozzle with a diameter of 0.8 mm into a reaction chamber using air (5 m$^3$/h). Here, an oxyhydrogen gas flame consisting of hydrogen (10 m$^3$/h) and primary air (10 m$^3$/h) is burning, in which the aerosol is reacted. In addition, 20 m$^3$/h of secondary air are introduced into the reaction chamber. A restrictor with a length of 150 mm and a diameter of 15 mm, through which the reaction mixture is passed, is installed in the reaction chamber below the flame. After cooling, the cerium oxide powder is separated from gaseous substances using a filter.

## Examples 2-4

Examples 2 to 4 are performed in the same way as Example 1; the quantities used and other process parameters can be taken from Table 1. In Example 5, no restrictor is employed and cerium(III) nitrate is used instead of cerium(III) 2-ethylhexanoate.

The physico-chemical data of the cerium oxide powders obtained can be taken from Table 2.

The naming of the dispersions corresponds to the relevant powders. Dispersion D1 corresponds to the powder P1 from Example 1, D2 corresponds to P2, etc..

**Tab. 1: Process parameters in the production of the cerium oxide powders P$_n$ starting from Ce(III) 2-ethylhexanoate**

| | | Examples according to the invention | | | |
|---|---|---|---|---|---|
| **Example** | | **1** | **2** | **3** | **4** |
| Cerium content | wt.% | 12 | 12 | 12 | 10 |
| Mass flow | g/h | 1200 | 1200 | 1400 | 1200 |
| **Gas volume flow** | | | | | |
| Hydrogen | m$^3$/h | 10 | 10 | 10 | 10 |
| Primary air | m$^3$/h | 10 | 10 | 10 | 10 |
| Secondary air | m$^3$/h | 20 | 20 | 20 | 20 |
| Atomiser air | m$^3$/h | 5 | 5 | 5 | 5 |
| Restrictor length | mm | 150 | 150 | 50 | 300 |
| Temperature       1[a] | °C | 1200 | 1185 | 1220 | 1150 |
|                   2[b] | °C | 800 | 820 | 900 | 785 |
| **Lambda** | | 1.47 | 1.47 | 1.47 | 1.47 |
| **Velocity** | | | | | |
| Nozzle discharge | m/s | 741.36 | 741.36 | 741.36 | 741.36 |
| Reaction chamber | m/s | 2.43 | 2.43 | 2.44 | 2.38 |
| **Residence time** | s | 0.8 | 0.8 | 0.8 | 0.7 |

(continued)

| | | Examples according to the invention | | | |
|---|---|---|---|---|---|
| **Example** | | **1** | **2** | **3** | **4** |
| Reaction chamber | | | | | |
| a) Temperature 1 = 0.5 m below the flame, <br> b) Temperature 2 = reactor outlet <br> c) cerium(III) nitrate instead of Ce(III) 2-ethylhexanoate; | | | | | |

**Tab. 2: Physico-chemical data of the cerium oxide powders**

| | | Examples according to the invention | | | |
|---|---|---|---|---|---|
| **Powder** [a] | | **P1** | **P2** | **P3** | **P4** |
| Fines /coarse portion | | 100/0 | 100/0 | 100/0 | 100/0 |
| Specific surface | $m^2/g$ | 93 | 104 | 71 | 134 |
| Average diameters | | | | | |
| Primary particles | nm | 10.10 | 9.82 | 12.80 | 6.88 |
| Aggregates | nm | 40.40 | 37.39 | 46.40 | 30.20 |
| Sodium | ppm | 53 | 58 | 53 | 50 |
| Carbon | wt.% | 0.03 | 0.05 | 0.03 | 0.01 |
| Mesopore volume | ml/g | 0.55 | 0.48 | 0.54 | n.d. |
| Tamped density | g/l | 100 | 87 | 105 | 80 |
| Specific density | $g/cm^3$ | 6.69 | 6.18 | 6.58 | n.d. |
| pH value[b] | | 4.58 | 4.72 | 4.56 | 6.5 |
| a) XRD phase: cubic; <br> b) as 4% solution; n.d. = not determined | | | | | |

**Tab.3: Aggregate diameters in dispersions[a]**

| Dispersion | | D1 | D2 | D3 | D4 |
|---|---|---|---|---|---|
| Average | nm | 156 | 147 | 114 | 130 |
| 90% less than | nm | 237 | 236 | 203 | 205 |
| 95% less than | nm | 280 | 277 | 237 | 249 |
| a) Content of cerium oxide: 2 wt.-% | | | | | |

## Examples according to the goldcatalyst

Deposition-precipitation method was used to prepare $Au/CeO_2$ and $Au/Ce_xMn_{1-x}O_2$ catalyst. CO oxidation reaction at room temperature and selective CO oxidation reaction in hydrogen stream at various temperatures were used to test the activity of catalyst.

## Preparation of support

Two kinds of supports were used in this study, $CeO_2$ and Ce-Mn-$O_2$ $CeO_2$ was from Degussa AG. $Ce_{1-x}Mn_xO_2$ support was prepared by impregnation method. $Mn(NO_3)_2$ was added into distilled water equal-volume to $CeO_2$ we took. The solution was added into $CeO_2$ powder dropwise under vigorous grinding. After calcining for two hours at 400 °C for 2 hours, The $Ce_{1-x}Mn_xO_2$ could be obtained. The sample C-(10*x)Mn means that the support is $Ce_{1-x}Mn_xO_2$. For example,

C-1Mn means that the support is $Ce_{0.9}Mn_{0.1}O_2$.

The $CeO_2$ from Degussa AG has the following chemical-physical datas:

### Preparation of gold catalysts

$HAuCl_4$ solution (1 g in 1 liter distilled water) was added with the rate 10 ml/min into the solution containing suspended support under vigorous stirring and the precipitation temperature of solution was maintained at 60 to 70 °C. The ammonia solution was used to adjust the pH value at 8. After aging for 2 hours, the precipitate was filtered and washed with hot water until no Cl⁻ was detected with $AgNO_3$ solution, then was dried at 80 °C overnight. The cake was calcined at 120 and 180 °C for several hours to obtain gold catalysts.

### Characterization results

### BET surface area

The surface areas of supports contained manganese were measured by ASAP 2010. The results are listed in Table 1. Addition of manganese decreased the surface area of $CeO_2$.

**Table 4. BET surface area of the Ce-Mn composites.**

| Samples | | Calcination Temperature (°C) | $S_{BET}$ (m²/g) | $S_{Lang}$ (m²/g) |
|---------|---|------------------------------|-------------------|--------------------|
| C-1Mn | $Ce_{0.9}Mn_{0.1}O_2$ | 400 | 45 | 61 |
| C-5Mn | $Ce_{0.5}Mn_{0.5}O_2$ | 400 | 24 | 32 |

### XRD

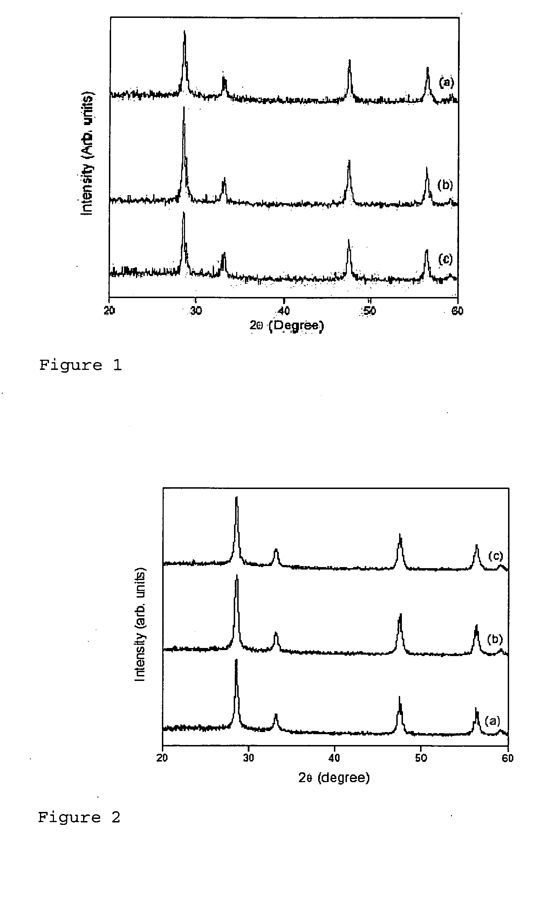

Figure 1 shows the XRD patterns of gold catalysts calcined at different temperatures on Adnano Ceria 90.

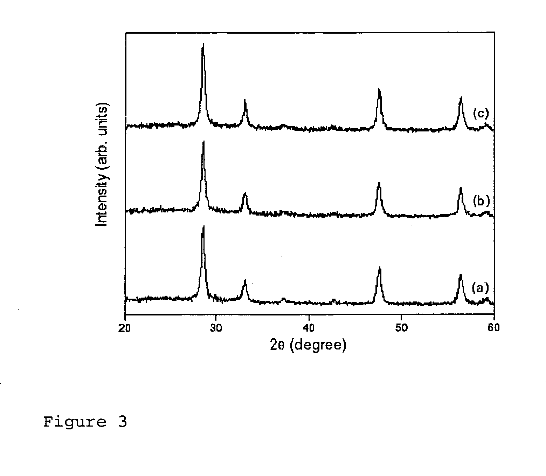

Figures 2 and 3 show the XRD patterns of C-1Mn and C-5Mn supports and gold catalysts. It was found that no gold peaks (2q=38.2° and 44.5°) were detected no matter what the calcination temperature was. It is because that the particle size of gold is too small to detect (<5 nm). This result is well consisted with the TEM images as discussed in the later section. Well crystalline $CeO_2$ were also detected in XRD patterns. It should be notice that Figure 3 shows a small peak at 2q= 37.3°, this is due to the (1,0,1) phase of $MnO_2$.

### TEM

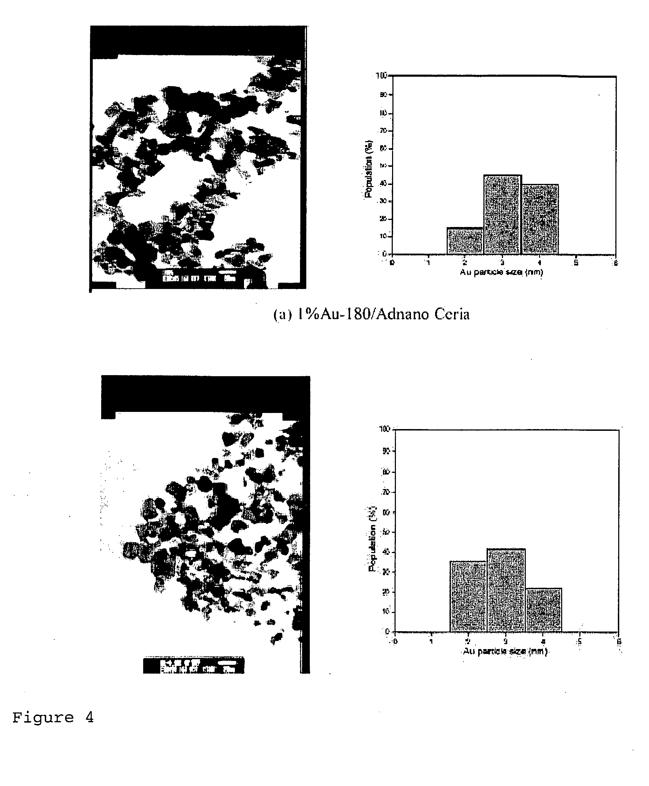

Figure 4 shows the TEM image and size distribution of gold of gold catalysts supported on Adnano Ceria 90 and calcined at 120 and 180 °C, respectively. It was found that the particle size of gold are about 2-4 nm and the particle size of Ceria support is about 10-20 nm. No obvious relationship between the Au particle size and the calcination temperature of gold was found.

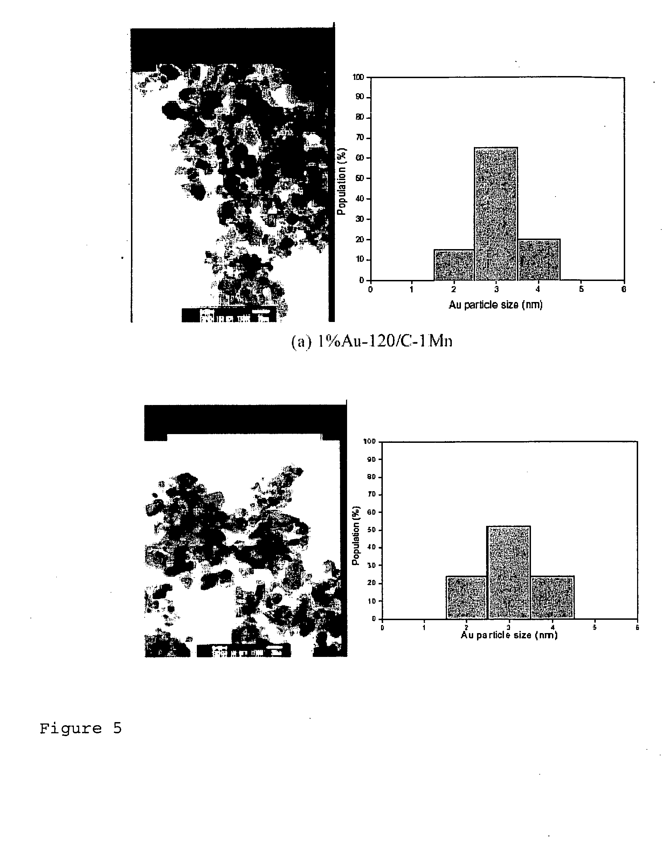

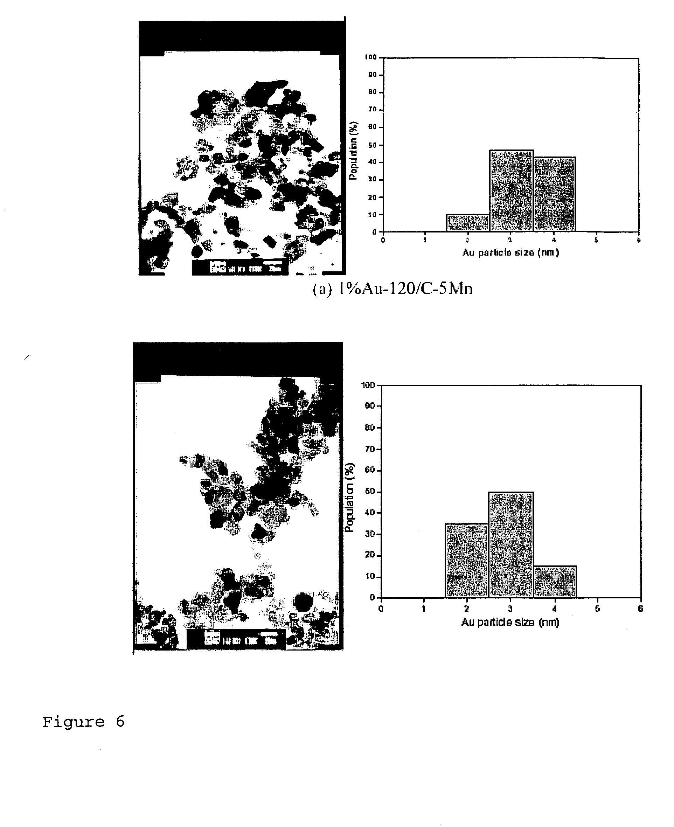

Figures 5 and 6 show the TEM images and size distributions of gold for catalysts supported on C-1Mn and C-5Mn and calcined at 120 and 180 °C, respectively. The results are the same. It means that the particle size would be similar when the preparation method is the same.

### XPS

XPS analysis was used to determine the oxidation state of gold in this study.

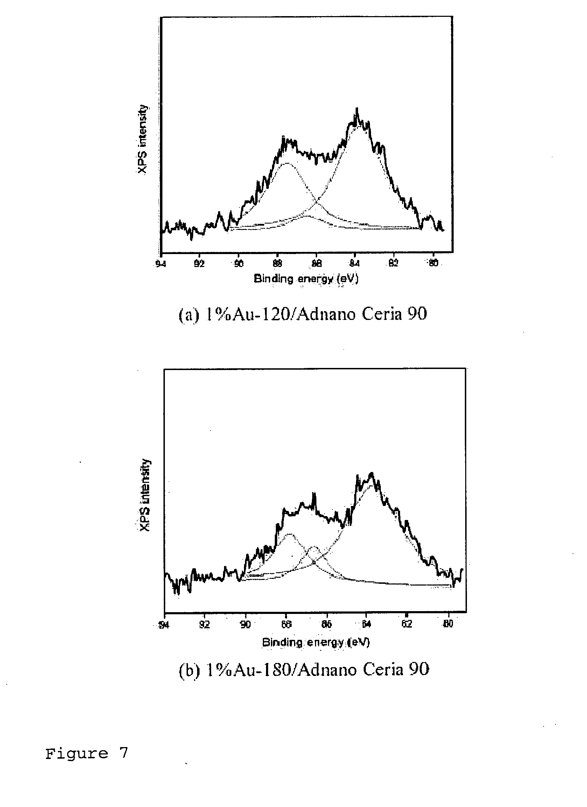

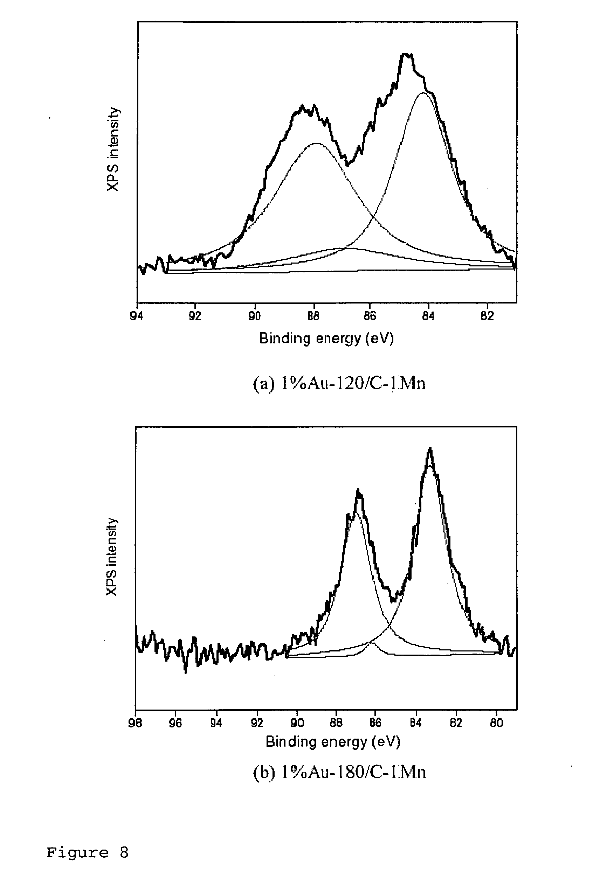

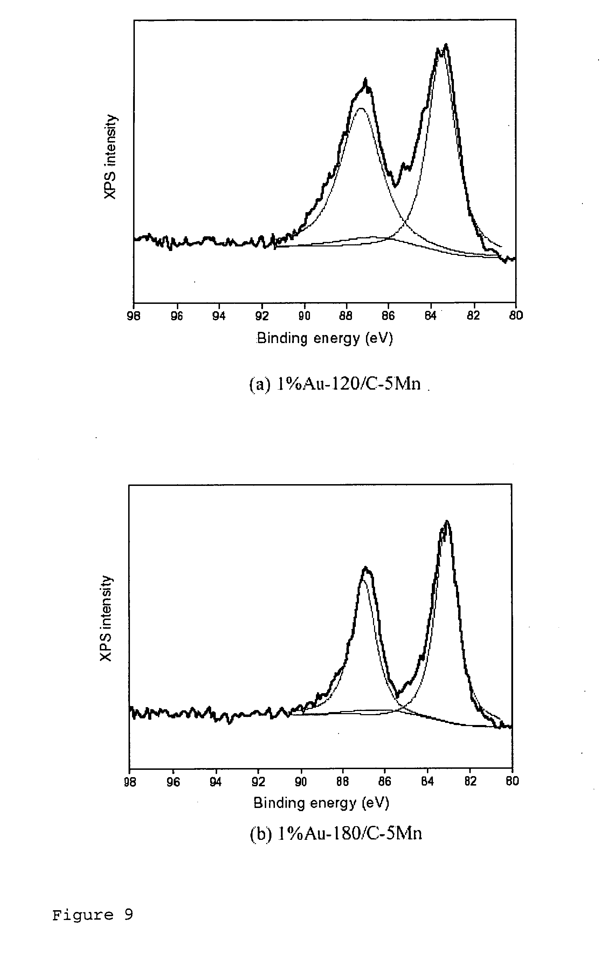

Figures 7-9 show the XPS spectra of gold. It was found that the peaks of catalysts calcined at 180 °C are more separated than 120 °C. It means that more metallic gold was appeared at that temperature. The results are in accordance with literatures (Neri et al., 2003; Bowker et al., 2003).

### Reaction test

### CO oxidation

Catalytic activity was measured with a fixed bed continuous flow reactor. Samples were placed in a class column, and no pretreatment was applied in this test. 0.05 cm³ catalysts were used. The reactant gas containing 1000 ppm CO, 2 %$O_2$ and $N_2$ else was admitted at the flow rate of 50 cc/min through the reactor. The flow rates were monitored by mass flow controllers. The reaction was occurred at room temperature (25 °C). A CO sensor was used to detect the output CO concentration. The CO conversion was calculated with the following equation:

$$\text{Conversion } (X\%) = \frac{[CO]_{in} - [CO]_{out}}{[CO]_{in}} *100 \%$$

**Selective CO oxidation in H$_2$ stream**

The catalytic activity was measured in a glass downward, fixed-bed continuous-flow reactor, with 0.1 cm$^3$ catalysts. The reactant gas containing 1.33 % CO, 1.33 % O$_2$, 65.33 % H$_2$ and He for balance was guiding into the reactor with the flow rate of 50 cc/min. The reactor was heated with a regulated furnace (heating rate: 1 °C/min) and the temperature was measured by thermocouple placed inside the catalysts bed. The outlet gas was analyzed by a gas chromatography equipped with a thermal conductivity detector. The GC column was MS-5A. Calibration was done with a standard gas containing known concentrations of the components. The CO conversion and selectivity were calculated as follows:

$$\text{CO conversion } (X_{CO}\%) = \frac{[CO]_{in} - [CO]_{out}}{[CO]_{in}} *100 \%$$

$$\text{O}_2 \text{ conversion } (X_{O2}\%) = \frac{[O_2]_{in} - [O_2]_{out}}{[O_2]_{in}} *100 \%$$

$$\text{Selectivity } (S\%) = \frac{0.5 * X_{CO}}{X_{O2}} *100 \%$$

**Reaction results**

**CO oxidation**

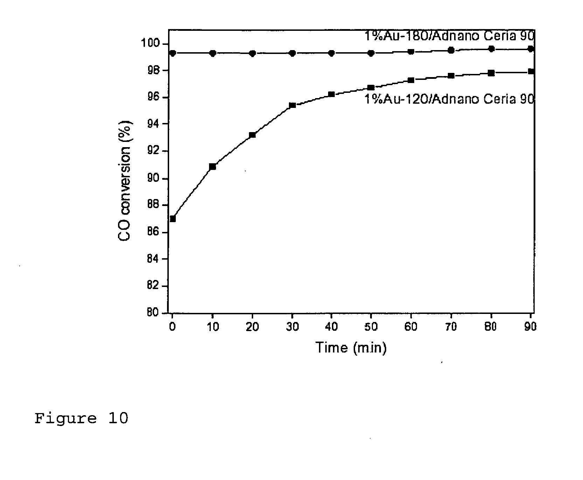

Figure 10 shows the result of CO oxidation reaction on gold catalysts supported on Adnano Ceria 90 and calcined at 120 and 180 °C, respectively. Both of them showed excellent activities. The catalyst calcined at 180 °C could fully remove CO at room temperature. The gold catalyst calcined at 120 °C could also remove CO more than 95%. This result means that metallic gold is better than oxidic gold for CO oxidation at room temperature, which is consisted with the result reported by Haruta (1997, 2004) and Grisel (2002).

**Selective CO oxidation in hydrogen stream**

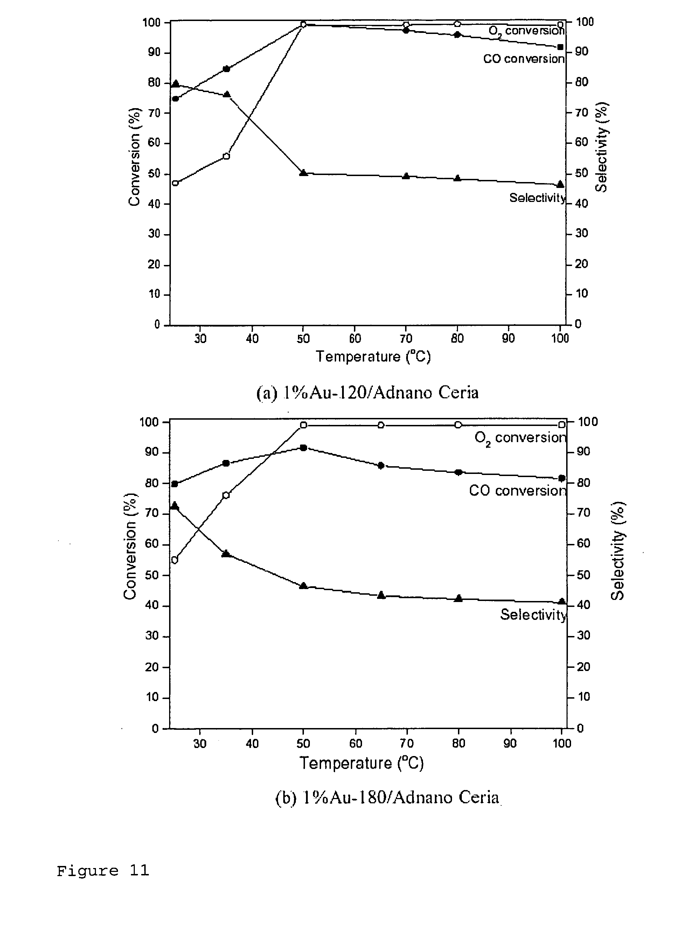

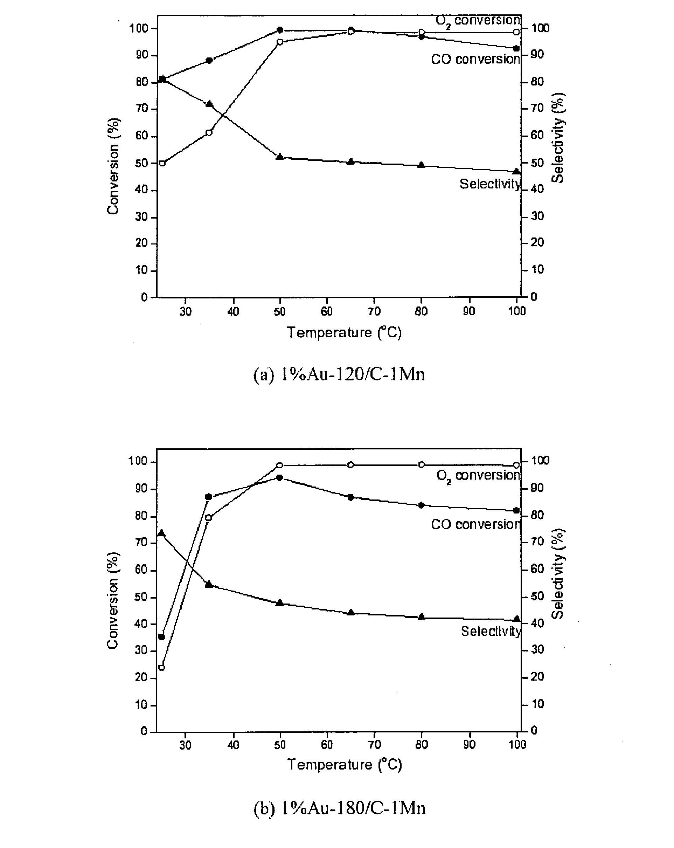

Figure 11 shows the catalytic activities of gold catalysts supported on Adnano Ceria 90 and calcined at 120 and 180 °C, respectively. It is interesting that when the reaction temperature was below 50 °C, the catalyst calcined at 180 °C was more active than those calcined at 120 °C. In contrast, if the reaction temperature was above 50 °C , the catalyst calcined at 120 °C was more active. It should be noted that oxygen in this study was fully consumed at the temperature greater than 50 °C no matter what catalyst was used. This suggests that hydrogen is easier to react with oxygen at higher temperature under the existence of metallic gold.

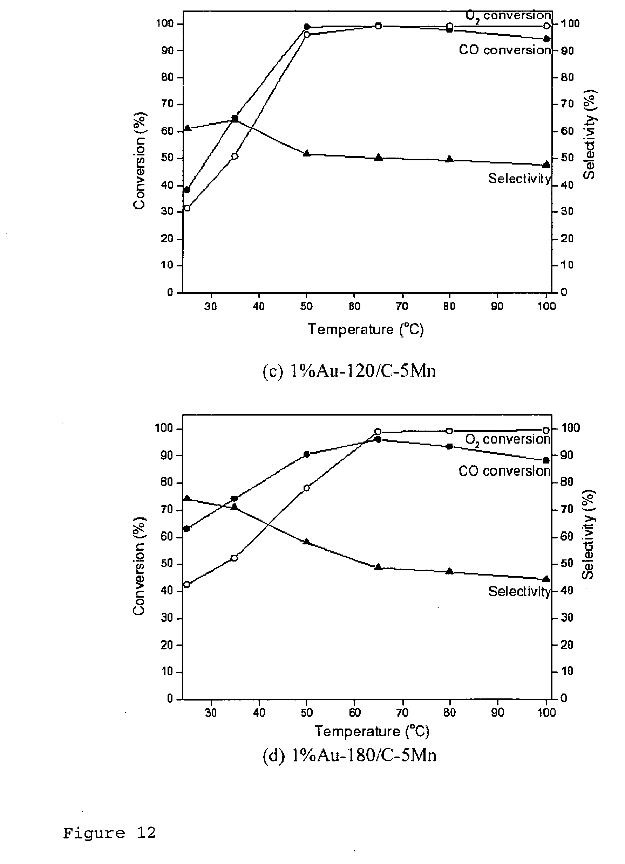

Figure 12 shows the reaction results of gold catalysts supported on Ce-Mn-O. It is found that the catalytic activities at 80 °C, which is the most suitable temperature for PROX reaction in fuel cell, increased with the addition of manganese in Ceria. The catalysts calcined at 120 °C with more oxidic gold showed higher activities at high temperature.

This is the same with gold supported on Adnano Ceria 90.

Table 2 lists the reaction results.

Table 3 shows the results according to the art.

Table 5. Reaction results of gold catalysts for selective CO oxidation reaction

| Support | Calcination temperature (°C) | Reaction temperature (°C) | CO conversion (%) | Selectivity (%) |
|---|---|---|---|---|
| Adnano Ceria | 120 | 25 | 74.7 | 79.6 |
| | | 50 | 99.5 | 50.1 |
| | | 80 | 95.8 | 48.2 |
| | 180 | 25 | 79.7 | 72.5 |
| | | 50 | 91.7 | 46.3 |
| | | 80 | 83.5 | 42.4 |
| C-1Mn | 120 | 25 | 81.3 | 81.1 |
| | | 50 | 99.5 | 52.3 |
| | | 80 | 96.9 | 49.2 |
| | 180 | 25 | 35.2 | 73.5 |
| | | 50 | 94.3 | 47.7 |
| | | 80 | 83.9 | 42.4 |
| C-5Mn | 120 | 25 | 38.3 | 61.0 |
| | | 50 | 98.9 | 51.5 |
| | | 80 | 97.8 | 49.3 |
| | 180 | 25 | 63.0 | 74.1 |
| | | 50 | 90.3 | 57.9 |
| | | 80 | 93.3 | 47.1 |

Table 6. Selective CO oxidation reaction in literatures

| Catalysts | CO conversion (%) | Selectivity (%) | Reaction condition | Ref |
|---|---|---|---|---|
| $1\%Au/Ce_{0.9}Mn_{0.1}O_2$ (Deg) Calcined at 120 °C | 15 | 10 | $1\%CO+1\%O_2$ 80 °C | 1 |
| | 48 | 66 | $0.8\%CO+3.8\%Air+23.5\%CO_2$ 110 °C | 2 |
| $5\%Au/CeO_2$ | 20 | Not mentioned | WGS reaction | 3 |
| $2.8\%Au/CeO_2$ | 65 | | $0.8\%CO+0.4\%O_2+40.4\%He+58.4\%H_2$ 20-60 °C | 4 |
| $Au/CeO_2$ | 83 | 35 | $O_2/CO=1.5$ 80 °C | 5 |

1. International Journal of Hydrogen Energy, 29, 429-435 (2004) 2. Catalysis Today, 93-95, 183-190 (2004) 3. Catalysis Today, 72, 51-57 (2002) 4. Angew. Chem. Int. Ed, 43, 2538-2540 (2004) 5. Journal of Power Sources, 135, 177-183 (2004)

List of the figures

Figure 1.

The XRD patterns of

(a) 1%Au-180/Adnano Ceria,
(b) 1%Au-120/Adnano Ceria and
(c) Adnano Ceria
(Au-180 means the catalyst was calcined at 180 degree Celsius.)

Figure 2.

The XRD patterns of

(a) C-1Mn,
(b) 1%Au-120/C-1Mn and
(c) 1%Au-180/C-1Mn.

Figure 3.

The XRD patterns of

(a) C-5Mn,
(b) 1%Au-120/C-5Mn and
(c) 1%Au-180/C-5Mn.

Figure 4.

TEM images of gold catalysts calcined at different temperatures supported on Adnano Ceria.

Figure 5.

TEM images and size distribution of gold of catalysts supported on C-1Mn.

Figure 6.

TEM images and size distribution of gold of catalysts supported on C-5Mn.

Figure 7.

XPS results of gold calcined at different temperatures supported on Adnano Ceria 90.

Figure 8.

XPS results of gold calcined at different temperatures supported on C-1Mn.

Figure 9.

XPS results of gold calcined at different temperatures supported on C-5Mn.
CO conversion (%)

Figure 10.

CO conversion of gold catalysts supported on Adnano Ceria. The Au catalysts were prepared by deposition-precipitation method using $NH_4OH$ and $HAuCl_4$, synthesized at pH 8 and calcined at 120 and 180 °C in air. Catalyst sample: 0.05 cm$^3$ of 1 wt.% $Au/CeO_2$. Reactant gas: 1000 ppm CO, 2 % $O_2$ and $N_2$ for balance, 50 ml/min, GHSV=60,000 h-1. The catalytic activity was measured at ambient temperature about 25 °C.

Figure 11.

Selective CO oxidation reaction results of gold catalysts supported on Adnano Ceria 90 calcined at 120 and 180 °C. The Au catalysts were prepared by deposition-precipitation method using $NH_4OH$ and $HAuCl_4$, synthesized at pH 8. Catalyst sample: 0.1 cm$^3$.

Reactant gas: 1.33% CO+1.33 % $O_2$ +65.33% $H_2$ +He for balance, 50 ml/min,
GSHV=30,000 $h^{-1}$.

Figure 12.

Selective CO oxidation reaction results of gold supported on Ce-Mn-O and calcined at different temperatures. The Au catalysts were prepared by deposition-precipitation method using $NH_4OH$ and $HAuCl_4$, synthesized at pH 8. Catalyst sample: 0.1 $cm^3$.
Reactant gas: 1.33% CO+1.33 % $O_2$ +65.33% $H_2$ +He for balance, 50 ml/min, GSHV=30,000 $h^{-1}$.

**Claims**

1. Goldcatalyst, **characterized in that** the gold is supported on ceria.

2. Goldcatalyst according to claim 1, **characterized in that** the ceria is a polycrystalline cerium oxide powder in the form of aggregates of primary particles, which is **characterised in that**

   - a specific surface of between 20 and 200 $m^2/g$,
   - an average primary particle diameter of between 5 and 20 nm, and
   - an average, projected aggregate diameter of between 20 and 100 nm.

3. Goldcatalyst according to claim 1 or 2, **characterized in that** the ceria is a $Ce_{1-x}Mn_xO_2$ support.

4. Goldcatalyst according to claim 3, **characterized in that** the $Ce_{1-x}Mn_xO_2$ support contains the elements in the ratio Ce:Mn=10:1 to 1:1.

5. Method to produce the support according to claims 3 and 4, **characterized in that** via the impregnation method a solution of a Mn-salt is added to the $CeO_2$ powder and the impregnated $CeO_2$ powder is than calcined.

6. Method to produce the goldcatalyst according to claims 1 to 4, **characterized in that** a solution of a gold-salt is added to a solution, which contains the suspended support, whereby the temperature is maintained at 60 to 70 °C, after aging a time the precipitate is filtered and washed until no Cl-ions were detected, dried and then calcined.

7. Use of the gold catalyst according to claims 1 to 4 for the oxidation of CO in a $H_2$-stream.

Figure 1

Figure 2

Figure 3

(a) 1%Au-180/Adnano Ceria

Figure 4

(a) 1%Au-120/C-1Mn

Figure 5

(a) 1%Au-120/C-5Mn

Figure 6

(a) 1%Au-120/Adnano Ceria 90

(b) 1%Au-180/Adnano Ceria 90

Figure 7

(a) 1%Au-120/C-1Mn

(b) 1%Au-180/C-1Mn

Figure 8

(a) 1%Au-120/C-5Mn

(b) 1%Au-180/C-5Mn

Figure 9

Figure 10

(a) 1%Au-120/Adnano Ceria

(b) 1%Au-180/Adnano Ceria

Figure 11

(a) 1%Au-120/C-1Mn

(b) 1%Au-180/C-1Mn

(c) 1%Au-120/C-5Mn

(d) 1%Au-180/C-5Mn

Figure 12

EP 1 724 012 A1

**European Patent Office**

**EUROPEAN SEARCH REPORT**

Application Number

EP 05 01 1050

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/114746 A1 (ROARK SHANE E ET AL) 22 August 2002 (2002-08-22) * paragraph [0004] - paragraph [0077] * ----- | 1-7 | B01J23/52 B01J23/63 B01J23/68 B01J37/02 |
| X | WO 98/32524 A (ANGLO AMERICAN RESEARCH LABORATORIES LIMITED; TUMILTY, JAMES, ANTHONY) 30 July 1998 (1998-07-30) * page 3, paragraph 4 - page 8; claims * ----- | 1-7 | |
| X | US 6 583 329 B1 (PODREBARAC GARY G) 24 June 2003 (2003-06-24) * column 3, line 20 - column 4, line 35; claims * ----- | 9,10 | |
| A | TERRIBILE D ET AL: "Catalytic combustion of hydrocarbons with Mn- and Cu-doped ceria-zirconia solid solutions" CATALYSIS TODAY, AMSTERDAM, NL, vol. 47, 1999, pages 133-140, XP002295320 * the whole document * ----- | 1-7 | |
| A | ANDREEVA D ET AL: "Low-temperature water-gas shift reaction over Au/CeO2 catalysts" CATALYSIS TODAY, AMSTERDAM, NL, vol. 72, 2002, pages 51-57, XP002298798 * the whole document * ----- | 1-7 | TECHNICAL FIELDS SEARCHED (Int.Cl.7) B01J |
| A | PANZERA G ET AL: "CO selective oxidation on ceria-supported Au catalysts for fuel cell application" JOURNAL OF POWER SOURCES, ELSEVIER SEQUOIA S.A. LAUSANNE, CH, vol. 135, no. 1-2, 3 September 2004 (2004-09-03), pages 177-183, XP004532929 ISSN: 0378-7753 * the whole document * ----- -/-- | 1-7 | |

The present search report has been drawn up for all claims

| Place of search | Date of completion of the search | Examiner |
|---|---|---|
| Munich | 14 September 2005 | de Cauwer, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 05 01 1050

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | LUENGNARUEMITCHAI A ET AL: "Selective catalytic oxidation of CO in the presence of H2 over gold catalyst" INTERNATIONAL JOURNAL OF HYDROGEN ENERGY, ELSEVIER SCIENCE PUBLISHERS B.V., BARKING, GB, vol. 29, no. 4, March 2004 (2004-03), pages 429-435, XP004488772 ISSN: 0360-3199 * the whole document *  ----- | 1-7 | |
| A | CARRETIN S. ET AL: "Nqnocrystalline CeO2 increases the activity of AU for CO oxidation by two orders of magnitude" ANGEW.CHEM.INT. ED, vol. 43, 2004, pages 2538-3540, XP002340190 * the whole document *  ----- | 1-7 | |

TECHNICAL FIELDS SEARCHED (Int.Cl.7)

The present search report has been drawn up for all claims

| Place of search | Date of completion of the search | Examiner |
|---|---|---|
| Munich | 14 September 2005 | de Cauwer, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 724 012 A1**

**ANNEX TO THE EUROPEAN SEARCH REPORT
ON EUROPEAN PATENT APPLICATION NO.**          EP 05 01 1050

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2005

| Patent document cited in search report | | | Publication date | Patent family member(s) | | | Publication date |
|---|---|---|---|---|---|---|---|
| US 2002114746 | A1 | | 22-08-2002 | AU | 3076201 | A | 03-07-2001 |
| | | | | EP | 1246691 | A1 | 09-10-2002 |
| | | | | WO | 0145833 | A1 | 28-06-2001 |
| WO 9832524 | A | | 30-07-1998 | AT | 236705 | T | 15-04-2003 |
| | | | | AU | 733455 | B2 | 17-05-2001 |
| | | | | AU | 1450297 | A | 18-08-1998 |
| | | | | CA | 2278360 | A1 | 30-07-1998 |
| | | | | DE | 69720785 | D1 | 15-05-2003 |
| | | | | DE | 69720785 | T2 | 12-02-2004 |
| | | | | EP | 0954370 | A1 | 10-11-1999 |
| | | | | JP | 2001508360 | T | 26-06-2001 |
| US 6583329 | B1 | | 24-06-2003 | US | 2003204123 | A1 | 30-10-2003 |
| | | | | US | 2003204124 | A1 | 30-10-2003 |

EPO FORM P0459

For more details about this annex : see Official Journal of the European Patent Office, No. 12/82

27

## REFERENCES CITED IN THE DESCRIPTION

### Patent documents cited in the description

- EP 1506940 A1
- US 2005036928 A1
- DE 102005344

### Non-patent literature cited in the description

- **HAMMER, B. ; NORSKOV, J.K.** *Nature,* 1995, vol. 376, 238
- **M. HARUTA ; N. YAMADA ; T. KOBAYASHI ; S. IIJIMA.** *J. Catal.,* 1989, vol. 115, 301
- **DONG, J.K. ; JAE, H.S. ; S.H. HONG ; I.S. NOON ; KOREAN J.** *Chem. Eng.,* 1997, vol. 14, 486-490
- **KAHLICH, M.J. ; GASTEIGER, H.A. ; BEHM, R.J.** *J. Catal.,* 1997, vol. 171, 93-105
- **HUTCHINGS, G.J. ; MIRZAEI, A.A. ; JOYNER, R.W.** *Appl. Catal.,* 1998, vol. 166, 143-152
- **LEE, C. ; YOOM, H.K. ; MOON, S.H. ; YOOM, K.J. ; KOREAN J.** *Chem. Eng.,* 1998, vol. 15, 590-595
- **BOND, G.C. ; THOMPSON, D.T.** *Catal. Rev.-Sci. Eng.,* 1999, vol. 41, 319
- **KOZLOV, A.I. ; KOZLOVA, A.P. ; LIU, H. ; IWA-SAWA, Y.** *Appl. Catal. A: General,* 1999, vol. 182, 9-28
- **OKUMURA, M.** Report of the Research Achievement of Interdisciplinary Basic Research Scetion: No. 393. *Osaka National research Institute,* 1999, vol. 6
- **FRENI, S. ; CALOGERO, G. ; CAVALLARO, S.** *J. Power Sources,* 2000, vol. 87, 28-38
- **COSANDEY, F. ; MADEY, T.E.** *Surf. Rev. Lett,* 2001, vol. 8, 73
- **HARUTA, M. ; DATE, M.** *Appl. Catal. A: General,* 2001, vol. 222, 427-437
- **R. J. H. GRISEL ; C. J. WESTRSTRATE ; A. GOOSSENS ; M. W. J. CRAJE ; A. M. VAN DER KRAAN ; B. E. NIEUWENHUYS.** *Catal. Today,* 2002, vol. 72, 123
- **J. P. HOLGADO ; G. MUNUERA.** XPS/TPR study of the reducibility of M/CeO2 catalysts (M=Pt, Rh): Does junction effect theory apply?. Elsevier Science, 1995
- **A.YEE ; S. J. MORRISON ; H. IDRISS.** *J. Catal.,* 1999, vol. 186, 279
- **A. YEE ; S. J. MORRISON ; H. IDRISS.** *Catal. Today,* 2000, vol. 63, 327
- **AVGOUROPOULOS, G. ; IOANNIDES, T. ; PAPA-DOPOULOU, C. ; BATISTA, J. ; HOCEVAR, S.** *matralis, catal. Today,* 2002, vol. 75, 157-167
- **A. LUENGNARUEMITCHAIA ; S. OSUWANA ; E. GULARIB.** *International Journal of Hydrogen Energy,* 2004, vol. 29, 429-435
- **CAMERON, D. ; CORTI, C. ; HOLLIDAY, R. ; THOMPSON, D.** *Gold-based catalysts for hydrogen processing and fuel cell systems,* 2003, www.wgc.org.
- **M. HARUTA.** *Journal of New Materials for Electrochemical Systems,* 2004, vol. 7, 163-172
- *International Journal of Hydrogen Energy,* 2004, vol. 29, 429-435
- *Catalysis Today,* 2004, 93-95183-190
- *Catalysis Today,* 2002, vol. 72, 51-57
- *Angew. Chem. Int. Ed,* 2004, vol. 43, 2538-2540
- *Journal of Power Sources,* 2004, vol. 135, 177-183